# EUROPEAN PATENT SPECIFICATION

(11) **EP 0 926 110 B1**
(45) Date of publication and mention of the grant of the patent: **24.04.2002**
(21) Application number: 98310572.7
(22) Date of filing: 22.12.1998
(51) Int. Cl.: C04B 35/593, B23B 27/14

(54) **Method for manufacturing of a silicon nitride sintered body and cutting insert formed of the sintered body**
Verfahren zur Herstellung von Sinterkörper aus Siliziumnitrid und aus dem Sinterkörper gebildeter Schneideinsatz
Procédé de fabrication d'un corps fritté en nitrure de silicium et outil coupant moulé à partir du corps fritté

(30) Priority: 26.12.1997 JP 36054797; 14.10.1998 EP 98308395
(43) Date of publication of application: 30.06.1999
(73) Proprietor: NGK Spark Plug Co. Ltd., Nagoya-shi Aichi-ken 467 (JP)
(72) Inventor: Matsubara, Masaru, Mizuho-ku, Nagoya-shi, Aich 467 (JP)
(74) Representative: Senior, Alan Murray

(56) References cited:
- EP-A- 0 801 042
- WO-A-94/16023
- US-A- 4 652 276

## Description

The present invention relates to a method for manufacturing the silicon nitride sintered body; and a cutting insert formed of the silicon nitride sintered body.

Conventionally, silicon nitride sintered bodies predominantly containing silicon nitride and having an excellent strength have been used for cutting inserts, wear-resistant parts, etc.

In recent years, for the case where silicon nitride is used for cutting inserts, there has been proposed a technique of decreasing the amount of a sintering aid (an oxide) which is added to the essential component, in order to enhance wear resistance of the sintered body (See PCT *Kohyo* Publication 8-503664 or U.S. patent no. 5,525,134). As disclosed therein, a sintered body contains at least about 85 volume percent (vol.%) silicon nitride and less than 5 vol.% intergranular phase. The ceramic has greater than 0.2 weight percent (wt.%) magnesia, greater than 0.2 wt.% yttria wherein the sum of magnesia and yttria is less than 5 wt.%. The ceramic also includes between 1.3 wt.% to 2.2 wt.% oxygen.

However, with the conventional cutting insert, there is a drawback that an extreme decrease in the amount of the sintering aid to be added renders sinterability lower than expected and decreases wear resistance and chipping resistance of the sintered body.

The present invention was made in view of the foregoing, and an object of the present invention is to provide a method of preparing silicon nitride sintered body having properties such as excellent wear resistance and a method for manufacturing the same. The present invention also provides a method of preparing cutting insert formed of the sintered body.

The silicon nitride sintered body of this invention has a dense texture, high hardness, and excellent wear resistance and chipping resistance.

According to a first aspect of the present invention, there is provided a method for manufacturing the above-described silicon nitride sintered body including the following steps: adding an organic binder to a composition containing silicon nitride as an essential component and exhibiting a theoretical oxygen content of 2.0-2.3 wt.%; forming a shaped or pressed body therefrom; heating to remove the binder (e.g., forming a calcined body); introducing an oxygen-containing gas so as to control the carbon content to 0.10-0.60 wt.% (e.g., cooling the calcined body); and sintering the resultant compact in a nitrogen atmosphere to control the oxygen content to 1.2-1.5 wt.% (e.g., primary and secondary sintering steps).

In the method of manufacturing the sintered body of this invention, when primary sintering is performed under pressurization, decomposition of silicon nitride is prevented. Thus, high-temperature sintering is realized. Moreover, pores are effectively closed by the high-temperature sintering at, for example, subsequent secondary sintering through HIP (hot isostatic pressing).

According to a second aspect of the present invention, there is provided a method of preparing a cutting insert formed of the silicon nitride sintered body of the first aspect.

The cutting insert obtained in this invention has a dense texture, high hardness, and excellent wear resistance and chipping resistance.

Embodiments of the invention will now be described, by way of example only, with reference to the accompanying drawings, in which:
Fig. 1 is an explanatory view showing the change of texture of the sintered body during a firing step; and
Fig. 2 is an explanatory view showing different types of wear.

The polycrystalline sintered body of the present invention is predominantly βb-Si₃N₄, wherein the oxygen content of the body is between 1.2-1.5 wt.%.

As clarified in the following Examples, the silicon nitride sintered body of the present invention has a dense texture, high hardness value, and excellent wear resistance and chipping resistance, since the sintered body has an appropriately controlled oxygen content of 1.2-1.5 wt.%. The sintered body is also characterized as having minipores of 10 µm or less observable in an amount of 0.02% by volume or less.

The method for manufacturing the above-described silicon nitride sintered body according to the present invention comprises the following steps: adding an organic binder to a composition containing silicon nitride as an essential component and exhibiting a theoretical oxygen content of 2.0-2.3 wt.%; forming a shaped or pressed body therefrom; heating to remove the binder (e.g., forming a calcined body); introducing an oxygen-containing gas so as to control the carbon content to 0.10-0.60 wt.% (e.g., cooling the calcined body); and sintering the resultant compact in a nitrogen atmosphere to control the oxygen content to 1.2-1.5 wt.% (e.g., primary and secondary sintering steps).

In embodiments of the present invention, a sintering aid is added in a minimum amount that enables sintering so that the texture is densified and a grain boundary phase (glass phase) is reacted with carbon remaining in the compact, to thereby decrease the amount of the grain boundary phase.

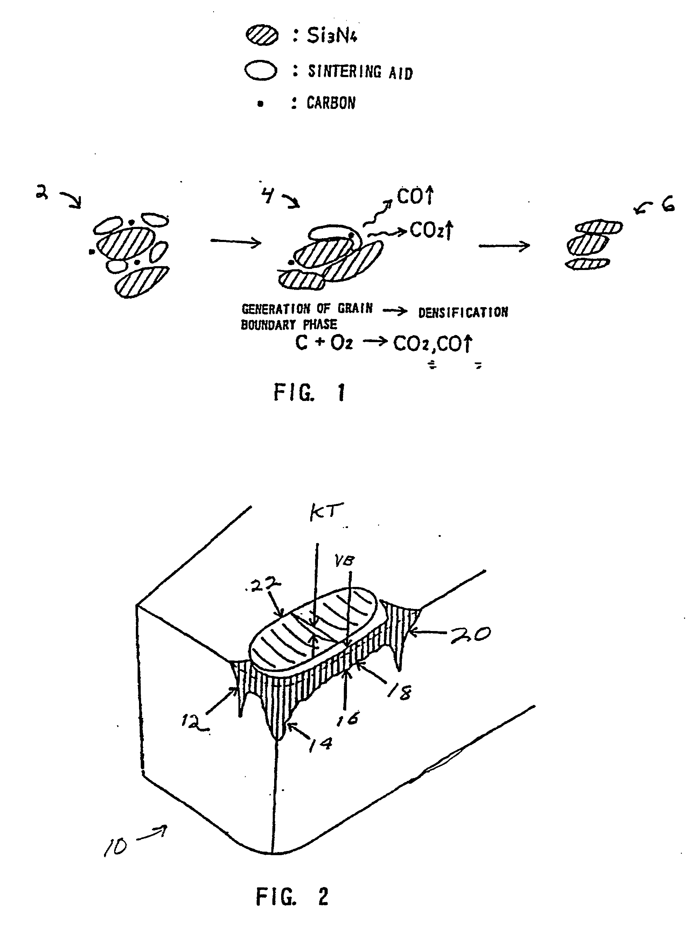

Specifically, as schematically shown in Fig. 1, a calcined body incorporating with a predetermined amount of carbon undergoes primary and secondary sintering to remove carbon in the forms of carbon dioxide and carbon monoxide by combining with oxygen in order to perform dense sintering. Thus, a silicon nitride sintered body having high density and excellent wear resistance can be obtained, since decrease of a grain boundary phase and densification are simultaneously attained in the above-described process.

Reasons for limiting the above-described values will next be described.

### (1) Theoretical oxygen content; 2.0-2.3 wt.%

The theoretical, i.e. calculated, oxygen content relates to an amount of a sintering agent (oxide). When the content is less than 2.0 wt.%, densification is difficult, whereas when it is in excess of 2.3 wt.%, a grain boundary predominates to lower the wear resistance of the sintered body.

### (2) Carbon content; 0.10-0.60 wt.%

When the carbon content in the calcined body is less than 0.10 wt.%, reaction to decrease a grain boundary phase is insignificant and the amount of a grain boundary phase therefore becomes considerably high which lowers the wear resistance of the sintered body, whereas when it is in excess of 0.60 wt.%, the wear resistance of the sintered body decreases.

### (3) Oxygen content; 1.2-1.5 wt.%

When the oxygen content is less than 1.2 wt.%, a grain boundary is formed in an excessively low amount which results in poor densification, whereas when it is in excess of 1.5 wt.%, the wear resistance of the sintered body decreases.

In embodiments of the method for manufacturing the silicon nitride sintered body of the present invention, sintering in a nitrogen atmosphere is preferably performed under pressurization.

Embodiments of the present invention exemplify conditions for sintering in a nitrogen atmosphere. For example, primary sintering performed under pressurization of several atm (several bar) prevents silicon nitride from decomposing to enable sintering at high temperature. Moreover, pores are effectively closed by the high-temperature sintering in subsequent secondary sintering performed through, for example, HIP (hot isostatic pressing).

In embodiments of the method for manufacturing the silicon nitride sintered body of the present invention, preferably, a microcrystalline-wax-type organic binder is used as an organic binder.

Embodiments of the present invention exemplify species of the organic binder, and a microcrystalline-wax-type organic binder may be used as the organic binder. The use of the organic binder advantageously enhances flowability of powders and strength of shaped or pressed bodies.

In embodiments of the method for manufacturing the silicon nitride sintered body of the present invention, an oxygen-containing gas is preferably introduced in a cooling step performed after removal of the organic binder by heating.

Embodiments of the present invention exemplify the timing at which to introduce the oxygen-containing gas, which is performed in a cooling step performed after removal of the organic binder by heating. This method enables simultaneous introduction of the oxygen-containing gas and cooling after calcination and facilitates these operation steps. Also, carbon is effectively incorporated into a calcined body by introducing the oxygen-containing gas in the cooling step. Furthermore, the amount of carbon to be incorporated may be easily regulated by regulating conditions (e.g., flow rate) of the oxygen-containing gas to be introduced.

In embodiments of the method for manufacturing the silicon nitride sintered body of the present invention, air is used as the oxygen-containing gas.

Embodiments of the present invention exemplify species of the oxygen-containing gases, and use of air facilitates the manufacturing steps.

Embodiments of the cutting insert of the present invention has a dense texture, high hardness value, and excellent wear resistance and chipping resistance, since the sintered body that constitutes the cutting insert has an appropriately controlled oxygen content of 1.2-1.5 wt.%.

Embodiments of the invention, i.e., the silicon nitride sintered body of the present invention, the method for manufacturing the sintered body, and inserts made of the silicon nitride sintered body, will be described.

a) First is described the method for manufacturing the silicon nitride sintered body in the present Example.

α-Si₃N₄ having an average grain size of 1.0 µm or less (oxygen content: 1.3 wt.%) as an essential component and MgO, Al₂O₃, and Yb₂O₃, each having an average grain size of 1.0 µm or less and serving as a sintering aid, were weighed at ratios specified in Table 1 shown below. The ratio of raw materials was determined such that the theoretical oxygen content in the weighed composition was regulated to 2.0-2.3 wt.%.

The thus-weighed material was mixed with ethanol as a solvent for 96 hours by use of an Si₃N₄ ball and a pot having an inner wall made of Si₃N₄, so as to form a slurry.

The slurry was passed through a 44 nm(325-mesh)-sieve, and a microcrystalline-wax-type organic binder dissolved in ethanol was added in an amount of 5.0 wt.% to the sieved slurry. The resultant mixture was spray-dried.

The obtained granulated powder was press-shaped to a shape identified as SNGN120408 (ISO standard), then the compact was placed in a heating apparatus and calcined. The calcination was performed at 600°°C for 60 minutes in a nitrogen atmosphere to dewax the compact.

Moreover, in a cooling step during calcination air was introduced into the heating apparatus in an amount of 3-60 L/min as specified in Table 1, such that the carbon content in the dewaxed compact was regulated to 0.10-0.60 wt.%.

Primary sintering was then performed at 1800-1900°°C for 240 minutes in a nitrogen atmosphere having a predetermined pressure of 3 atm (∼ 3 bar).

Subsequently, secondary sintering was performed through HIP to finally obtain the silicon nitride sintered body. The secondary sintering was performed at 1600-1700°°C for 120 minutes in a nitrogen atmosphere having a predetermined pressure of 1000 atm (∼ 1000 bar).

The oxygen content of the sintered body was regulated to 1.2-1.5 wt.% through combination of primary and secondary sintering steps.

An X-ray diffraction analysis confirmed that α-Si₃N₄ used as a raw material had been converted to β-Si₃N₄ through the sintering steps.

The thus-obtained silicon nitride sintered bodies of the present Examples are polycrystalline, comprise predominantly β-Si₃N₄ in an amount of 95-97 vol.%, and have an oxygen content of 1.2-1.5 wt.%.

Therefore, the sintered bodies have excellent characteristics such as a dense texture, high hardness, high fracture toughness, and high wear resistance.

b) Next, there are described Test Examples to confirm the effects of the silicon nitride sintered bodies in the present Examples.

Each of the silicon nitride sintered bodies obtained through the above-described method for manufacturing was processed by polishing to form cutting inserts having a shape identified as SNGN120408 (ISO standard). These cutting inserts were used as sample Nos. 1 to 5.

As Comparative Examples, silicon nitride sintered bodies were manufactured and similarly processed in accordance with compositions and conditions specified in Table 1, to thereby serve as sample Nos. 6 and 7, each of which has a carbon content (residual carbon) and an oxygen content outside the scope of the present invention.

The below-described measurements and evaluations of (1) to (4) were conducted on the above-described sample Nos. 1 to 7.

### (1) <Measurement of the carbon content (residual carbon content) after calcination>

Each of the calcined bodies was crushed to a particle size of φ 1 [mm] or less. The crushed product was weighed during burning in an oxygen stream-infrared absorption method in accordance with JIS-Z2615.

### (2) <Measurement of the oxygen content in the sintered bodies>

Each of the sintered bodies was crushed to a particle size of φ 1 [mm] or less and fused by heating in an inert gas. The determination was performed through a non-dispersive infrared absorption method.

### (3) <Physical properties>

### • (Apparent porosity)

A cross-section of each sample was mirror-polished and the surface was examined by use of a metallurgical microscope to thereby classify apparent porosity in accordance with CIS-006B-1983, which is registered as "Classification Standards for Apparent Porosity of Cemented Carbides" and corresponds to ISO 4505.

### • (Vickers hardness Hv)

Measurement conditions: depressor-indentation pressure; 30 kg and indentation time; 15 sec.

### • (Fracture toughness Kc)

Measured through an IF method specified in JIS R1607.

### (4) <Evaluation of cutting performance>

In accordance with the below-described conditions, an edge face of a cylindrical cast iron workpiece was continuously machined under dry conditions and the maximum wear depth (VBₘₐₓ) in flank wear depths (VB) (see Fig. 2) was measured at the tip of a cutting tool after 20 minutes' processing.
Workpiece material; JIS FC200
Workpiece shape; outer diameter φ 240 mm x
   inner diameter φ 180 mm
Cutting speed; V = 300 m/min
Feed per revolution; f = 0.34 mm/rev
Depth of cut; d = 0.2 mm

Measurement results of the above-described (1) to (4) are shown in Table 2 together with calcination conditions (heating conditions for removing an organic binder), cooling conditions (flow rate of air feeding for cooling the calcined body), conditions of primary sintering (temperature conditions of primary sintering), and conditions of secondary sintering (heating conditions at HIP), as shown in Table 3.

**Table 1**

| | | Feed composition [wt.%] | | | | Theor. oxygen content [wt%] |
|---|---|---|---|---|---|---|
| | | Sintering aid | | | Essential component | |
| | | MgO | Al₂O₃ | Yb₂O₃ | Si₃N₄ | |
| Example | 1 | 0.3 | 1 | 3 | 95.7 | 2.19 |
| | 2 | 0.3 | 1 | 3 | 95.7 | 2.19 |
| | 3 | 0.3 | 1 | 3 | 95.7 | 2.19 |
| | 4 | 0.5 | 1 | 1 | 97.5 | 2.06 |
| | 5 | 1 | 1 | 1 | 97.0 | 2.25 |
| Comp Ex. | 6 | 0.3 | 1 | 3 | 95.7 | 2.19 |
| | 7 | 0.3 | 1 | 3 | 95.7 | 2.19 |

**Table 2**

| | | | | Sintering conditions | |
|---|---|---|---|---|---|
| | | Heating condition at calcination [°C] | Cooling condition at calcination Air flow rate [l/min] | Primary sintering [°C] | Secondary sintering (HIP) [°C] |
| Example | 1 | 600 | 3 | 1850 | 1600 |
| | 2 | 600 | 30 | 1850 | 1600 |
| | 3 | 600 | 60 | 1850 | 1600 |
| | 4 | 600 | 30 | 1850 | 1600 |
| | 5 | 600 | 30 | 1900 | 1700 |
| Comparative Example | 6 | 600 | 0 | 1900 | 1700 |
| | 7 | 600 | 100 | 1850 | 1600 |

**Table 3**

| | | (1) | (2) | (3) | | | (4) |
|---|---|---|---|---|---|---|---|
| | | Residual carbon content [wt%] | Oxygen content of sintered body | Micro-pore* | Hardness Hv | Fracture tough-ness Kc | Cutting performance VBmax wear [mm] |
| Ex. | 1 | 0.42 | 1.20 | A02 | 1550 | 7.5 | 0.31 |
| | 2 | 0.25 | 1.37 | A02 | 1580 | 7.3 | 0.43 |
| | 3 | 0.11 | 1.48 | A02 | 1600 | 7.0 | 0.52 |
| | 4 | 0.22 | 1.22 | A02 | 1650 | 6.7 | 0.36 |
| | 5 | 0.36 | 1.25 | A02 | 1640 | 6.8 | 0.36 |
| Comp. Ex. | 6 | 0.68 | 1.16 | A08 | 1340 | - | chipping |
| | 7 | 0.09 | 1.54 | A02 | 1430 | 7.9 | 0.94 |

| | | | | | | | |
|---|---|---|---|---|---|---|---|
| * A02 refers to the case in which pinholes having a size of 10 µm or less are observed in amounts of 0.02% by volume. A08 refers to the case in which pinholes having a size of 10 µm or less are observed in amounts of 0.6% by volume. | | | | | | | |

As is apparent from Tables 1 to 3, sample Nos. 1 to 5, which fall within the scope of the present invention, are manufactured by the following steps: adding a sintering aid to silicon nitride as an essential component to thereby prepare a composition having a theoretical oxygen content of 2.0-2.3 wt.%; adding a microcrystalline-wax-type organic binder thereto to form a compact; heating the compact to remove the organic binder (calcination); cooling by introducing air so as to regulate the carbon content to about 0.10 to about 0.60 wt.%; sintering under pressurization in a nitrogen atmosphere (primary sintering) to regulate the oxygen content of the sintered body to 1.2-1.5 wt.%; and secondarily sintering through HIP.

Thus, the silicon nitride sintered bodies of sample Nos. 1 to 5 have an apparent porosity (micropore) of A02 (classification standards, CIS 006B-1983) and sufficient density. The hardness Hv is as high as 1550 or more and the fracture toughness Kc is as high as 6.7 or more. Furthermore, with regard to the cutting performance thereof, the sintered bodies have a VBmax wear depth of as low as 0.52 mm or less and sufficient wear resistance.

In contrast, sample No. 6 serving as a Comparative Example, which was calcined without air flow, has a residual carbon content as high as 0.68 wt.%. Therefore, the oxygen content in the silicon nitride sintered body is as low as 1.16 wt.%, which results in the apparent porosity (micropore) of A08 (classification standards, CIS 006B-1983) and poor density. The hardness Hv is as low as 1340. Moreover, disadvantageous chipping occurs during cutting.

Sample No. 7 serving as a Comparative Example, which was calcined under air flow of as much as 100 L/min, has a residual carbon content as low as 0.09 wt.%. Therefore, the oxygen content in the silicon nitride sintered body is as high as 1.54 wt.%, which results in a hardness Hv as low as 1430. Furthermore, with regard to the cutting performance thereof, the sintered body has a VBmax wear depth of as much as 0.94 mm or less and poor wear resistance.

Figure 1 is a schematic illustration which illustrates the change in texture of a sintered body during the firing step. As illustrated therein, a calcined body of silicon nitride, a sintering aid and carbon are combined (see 2). During sintering (4), the generation of a grain boundary phase progresses to densification (6). During sintering, carbon and oxygen are driven off as carbon dioxide and carbon monoxide until densification is complete.

As illustrated in Figure 2, a ceramic metal cutting insert is composed of silicon nitride ceramic material as disclosed herein. The insert 10 is particularly useful in roughing and interrupted cutting of metals where a combination of high toughness and high wear resistance is required.

The insert 10 includes a rake face 3 over which chips formed during machining flow. The insert 10 also includes flank faces 5 and cutting edges 7 which are formed at the junction of the rake face 3 and flank faces 5. As illustrated the rake face 3 includes face or crater wear 22 and crater wear amount KT. Figure 2 also illustrates flank wear 18 and wear amount VB. The figure also illustrates nose (triangular wear 14, flank wear 16, 18 and end cutting edge wear 12.

Obviously, numerous modifications and variations of the present invention are possible in light of the above teachings. It is therefore to be understood that within the scope of the claims, the present invention may be practised other than as specifically described herein.

The present disclosure relates to subject matter contained in Japanese Patent Application No. HEI 9-360547, filed on December 26, 1997.

## Claims

1. A method for manufacturing a polycrystaline sintered body comprising the steps of:
adding an organic binder to a composition containing silicon nitride as an essential component and having a calculated oxygen content of 2.0-2.3 weight percent; heating to remove the organic binder;
introducing an oxygen-containing gas thereby to control the carbon content to 0.1-0.6 weight percent; and,
sintering in a nitrogen atmosphere to control the oxygen content to 1.2-1.5 weight percent.

2. A method according to claim 1 for manufacturing a polycrystalline sintered body of between about 95-97 percent by volume β-Si₃N₄.

3. A method according to claim 1 or 2, wherein the sintering in a nitrogen atmosphere is performed under pressurization.

4. A method according to claim 3, wherein the sintering in a nitrogen atmosphere is performed by primary and secondary sintering operations.

5. A method according to claim 1, 2, 3 or 4 wherein a microcrystalline-wax-type organic binder is used as the organic binder.

6. A method according to any one of claims 1 to 5, wherein the oxygen-containing gas is introduced in a cooling step performed after removal of the organic binder by heating

7. A method according to any one of claims 1 to 6, wherein air is used as the oxygen-containing gas.

8. A method according to any one of claims 1 to 7, further comprising the step of forming the constituents into a pressed body prior to heating to remove the organic binder.

9. A method according to any one of the preceding claims, wherein, in said step of introducing an oxygen-containing gas, the flow rate of said oxygen-containing gas is in the range of from 3 to 60 litres per minute.

10. A method, according to any one of the preceding claims, for manufacturing a polycrystalline sintered body in which micropores of 10 µm or less are observable in an amount of 0.02 percent by volume or less of said body.

11. A method for manufacturing a cutting insert with improved wear resistance and chipping resistance comprising the steps of:
manufacturing a polycrystalline sintered body according to any one of the preceding claims, wherein said body has a hardness of at least about 1550 Hv; and providing said body with a rake face over which chips formed during chip-forming machining of a metallic body flow, a flank face and a cutting edge.

## Patentansprüche

1. Verfahren zur Herstellung eines polykristallinen Sinterkörpers, umfassend die folgenden Schritte:
Zugeben eines organischen Bindemittels zu einer Zusammensetzung, enthaltend Siliciumnitrid als einer wesentlichen Komponente, und die einen errechneten Sauerstoffgehalt von 2,0-2,3 Gewichtsprozent aufweist;
Erhitzen zur Entfernung des organischen Bindemittels;
Einführen eines Sauerstoff-haltigen Gases, um dadurch den Kohlenstoffgehalt auf 0,1-0,6 Gewichtsprozent zu kontrollieren; und
Sintern in einer Stickstoffatmosphäre, um den Sauerstoffgehalt auf 1,2-1,5 Gewichtsprozent zu kontrollieren.

2. Verfahren nach Anspruch 1 zur Herstellung eines polykristallinen Sinterkörpers von etwa 95 bis 97 Volumenprozent β-Si₃N₄.

3. Verfahren nach Anspruch 1 oder 2, wobei das Sintern in einer Stickstoffatmosphäre unter Druckerzeugung durchgeführt wird.

4. Verfahren nach Anspruch 3, wobei das Sintern in einer Stickstoffatmosphäre durch primäre und sekundäre Sintervorgänge erfolgt.

5. Verfahren nach Anspruch 1, 2, 3 oder 4, wobei ein mikrokristallines Wachsartiges organisches Bindemittel als das organische Bindemittel verwendet wird.

6. Verfahren nach einem der Ansprüche 1 bis 5, wobei das Sauerstoff-haltige Gas bei einem Kühlschritt eingeführt wird, der nach Entfernung des organischen Bindemittels durch Erhitzung erfolgt.

7. Verfahren nach einem der Ansprüche 1 bis 6, wobei Luft als das Sauerstoff-haltige Gas verwendet wird.

8. Verfahren nach einem der Ansprüche 1 bis 7, außerdem umfassend den Schritt des Formens der Bestandteile zu einem Presskörper vor der Erhitzung zur Entfernung des organischen Bindemittels.

9. Verfahren nach einem der vorangehenden Ansprüche, wobei, beim Schritt des Einführens eines Sauerstoff-haltigen Gases, die Fließgeschwindigkeit des Sauerstoff-haltigen Gases im Bereich von 3 bis 60 Litern pro Minute liegt.

10. Verfahren nach einem der vorangehenden Ansprüche, zur Herstellung eines polykristallinen Sinterkörpers, bei dem Mikroporen von 10 µm oder weniger in einer Menge von 0,02 Volumenprozent oder weniger des Körpers beobachtbar sind.

11. Verfahren zur Herstellung eines Schneideneinsatzes mit verbesserter Verschleißfestigkeit und Absplitterbeständigkeit, umfassend die folgenden Schritte:
Herstellen eines polykristallinen Sinterkörpers nach einem der vorangehenden Ansprüche, wobei der Körper eine Härte von mindestens etwa 1550 Hv aufweist; und
Versehen des Körpers mit einer Rechenfläche, über die während der spanabhebenden Formgebung entstandene Späne eines Metallkörpers fließen, einer Flankenfläche und einer Schneidkante.

## Revendications

1. Procédé pour fabriquer un corps polycristallin fritté, comprenant les étapes consistant à :
ajouter un liant organique dans une composition contenant du nitrure de silicium en tant que composant essentiel et ayant une teneur calculée en oxygène de 2,0 à 2,3 pour 100 en poids ;
chauffer pour éliminer le liant organique ;
introduire un gaz contenant de l'oxygène pour ainsi limiter la teneur en carbone entre 0,1 et 0,6 pour 100 en poids ; et
fritter sous atmosphère d'azote pour limiter la teneur en oxygène entre 1,2 et 1,5 pour 100 en poids.

2. Procédé selon la revendication 1 pour fabriquer un corps polycristallin fritté contenant environ 95 à 97 pour 100 en volume de β-Si₃N₄.

3. Procédé selon la revendication 1 ou 2, dans lequel le frittage sous atmosphère d'azote est exécuté sous pression.

4. Procédé selon la revendication 3, dans lequel le frittage sous atmosphère d'azote est exécuté par des opérations de frittage primaire et secondaire.

5. Procédé selon la revendication 1, 2, 3 ou 4, dans lequel un liant organique du type cire microcristalline est utilisé comme liant organique.

6. Procédé selon l'une quelconque des revendications 1 à 5, dans lequel le gaz contenant de l'oxygène est introduit lors d'une étape de refroidissement exécutée après l'élimination du liant organique par chauffage.

7. Procédé selon l'une quelconque des revendications 1 à 6, dans lequel de l'air est utilisé comme gaz contenant de l'oxygène.

8. Procédé selon l'une quelconque des revendications 1 à 7, comprenant en outre l'étape consistant à mettre les constituants sous la forme d'un corps comprimé avant le chauffage pour éliminer le liant organique.

9. Procédé selon l'une quelconque des revendications précédentes, dans lequel, lors de ladite d'introduction de gaz contenant de l'oxygène, le débit dudit gaz contenant de l'oxygène est compris entre 3 et 60 litres/minute.

10. Procédé selon l'une quelconque des revendications précédentes, pour fabriquer un corps polycristallin fritté dans lequel des micropores de 10 µm ou moins sont observables à raison de 0,02 pour 100 en volume ou moins dudit corps.

11. Procédé pour fabriquer une plaquette de coupe rapportée à résistance améliorée à l'usure et à l'ébréchure, comprenant les étapes consistant à :
fabriquer un corps polycristallin fritté selon l'une quelconque des revendications précédentes, dans lequel ledit corps a une dureté d'au moins environ 1550 Hv ; et doter ledit corps d'une face de dégagement sur laquelle passent des copeaux formés pendant l'usinage, avec formation de copeaux, d'un corps métallique, d'une face de dépouille et d'une arête de coupe.
